# EUROPEAN PATENT APPLICATION

(11) **EP 4 664 620 A1**
(43) Date of publication of application: **17.12.2025**
(21) Application number: 24217090.0
(22) Date of filing: 03.12.2024
(51) Int. Cl.: H01M 50/124, H01M 50/133

(54) **BATTERY, BATTERY DEVICE AND ELECTRIC EQUIPMENT**

(30) Priority: 11.06.2024 CN 202421319535 U
(71) Applicant: CALB Group Co., Ltd., Changzhou City, Jiangsu Province (CN)
(72) Inventor: LI, Ning, Changzhou City, Jiangsu Province (CN)
(74) Representative: Becker, Eberhard

(57) **Abstract**

The present disclosure relates to the technical field of batteries, and more particularly relates to a battery, a battery device and electric equipment. The battery includes a battery housing (10), wherein a surface of the battery housing (10) is provided with an insulating coating (20), and at least a part of a surface area of the battery housing (10) has a single-layer insulating coating, with a unit average size in the single-layer insulating coating being 1 mm² to 10 mm².

## Description

### BACKGROUND

### Technical Field

The present disclosure relates to the technical field of batteries, and more particularly relates to a battery, a battery device and electric equipment.

### Description of Related Art

Battery devices are often arranged in electric vehicles, and the battery devices are used for providing power to the electric vehicles. The battery device may include a box and a plurality of batteries which are configured sequentially in the box. In order to prevent the risks such as short circuit in a process of use, it is necessary to insulate the plurality of batteries. In the related art, the insulation among the batteries is achieved by cladding insulating blue films on surfaces of the batteries, and the insulating blue films are prone to breakdown in the process of use, resulting in relatively poor safety of the batteries.

It should be noted that the information disclosed in the above background section is merely used for enhancing the understanding of the background of the present disclosure and therefore may include information which does not constitute the prior art known to those ordinarily skilled in the art.

### SUMMARY

An object of the present disclosure is to provide a battery, a battery device and electric equipment, thereby improving the safety of the battery at least to some extent.

According to a first aspect of the present disclosure, a battery is provided. The battery includes a battery housing, wherein a surface of the battery housing is provided with an insulating coating, and at least a part of a surface area of the battery housing has a single-layer insulating coating, with a unit average size in the single-layer insulating coating being 1 mm² to 10 mm².

According to a second aspect of the present disclosure, provided is a battery device, including the above battery.

According to a third aspect of the present disclosure, provided is electric equipment, including the above battery device.

The battery provided in the example of the present disclosure includes the battery housing, and by arranging the insulating coating on the battery housing, the problem of poor safety caused by an insulating blue film used for insulation on a surface of the battery being prone to breakdown in the related art is solved, and the safety of the battery is improved. Moreover, at least a part of the surface area of the housing has the single-layer insulating coating, so that the single-layer insulating coating avoids the problem of poor interlayer interface bonding existing in a multi-layer coating. Further, the unit average size of the single-layer insulating coating is 1 mm² to 10 mm². Therefore, on the one hand, the problems that the appearance is poor, the surface of the coating has obvious granular sensation, and more seriously a local substrate is exposed due to discontinuous coating coverage caused by being too high in the viscosity of paint due to a deficient unit average size, and then being not conducive to the spread of the paint are avoided, and the quality and insulation performance of the insulating coating are improved; and on the other hand, the problem that the single-layer coating is too thin due to sagging being likely to occur caused by being too low in the viscosity of the paint due to an excessive unit average size is avoided.

It should be understood that the general description above and the detailed description below are merely illustrative and explanatory and are not intended to limit the present disclosure.

### BRIEF DESCRIPTION OF THE DRAWINGS

The accompanying drawings are incorporated into the specification and constitute a part of this specification herein, show examples which comply with the present disclosure, and are used for explaining the principle of the present disclosure together with the specification. It is apparent that the accompanying drawings described below are merely some examples of the present disclosure, and for those ordinarily skilled in the art, other accompanying drawings may also be obtained from these accompanying drawings without involving any creative effort.
FIG. 1 is a schematic structural diagram of a battery provided in an exemplary example of the present disclosure;
FIG. 2 is a schematic diagram of an insulating coating provided in an exemplary example of the present disclosure;
FIG. 3 is a three-dimensional topographic diagram of the insulating coating provided in an exemplary example of the present disclosure;
FIG. 4 is a schematic topographic diagram of the insulating coating provided in an exemplary example of the present disclosure; and
FIG. 5 is a schematic structural diagram of another battery provided in an exemplary example of the present disclosure.

10. Battery housing; 11. first end wall; 12. second end wall; 13. side wall; 131. first side wall; 132. second side wall; 20. insulating coating; 21. coating unit; 30. pole assembly; and 40. cell.

### DESCRIPTION OF THE EMBODIMENTS

The technical solutions in exemplary examples of the present disclosure will be described clearly and completely in conjunction with accompanying drawings in the exemplary examples of the present disclosure. The exemplary examples described herein are merely for illustrative purposes and are not intended to limit the scope of protection of the present disclosure. Therefore, it should be understood that various modifications and changes may be made to the exemplary examples without departing from the scope of protection of the present disclosure.

In the description of the present disclosure, unless expressly stipulated and defined otherwise, the terms "first" and "second" are merely used for descriptive purposes and are not to be construed as indicating or implying relative importance; the term "a plurality of" refers to two or more; and the term "and/or" includes any combination and all combinations of one or more associated listed items. Especially, reference to "the/said" object or "one" object is similarly intended to indicate one of a plurality of such objects which are possible.

Unless otherwise stipulated or illustrated, the terms such as "connection" and "fixing" should be understood in a broad sense, for example, the "connection" may be fixed connection, detachable connection, integral connection, electric connection or signal connection; and the "connection" may be direct connection, or may also be indirect connection through an intermediate medium. For those skilled in the art, the specific meaning of the above terms in the present disclosure may be understood according to specific conditions.

Further, in the description of the present disclosure, it is to be understood that the orientations such as "up", "down", "inside" and "outside" described in the exemplary examples of the present disclosure are described from the perspective shown in the accompanying drawings, and should not be construed as defining the exemplary examples of the present disclosure. It is also to be understood that in context, when referring to one element or feature being connected "above", "below", "inside" or "outside" other elements (one or more), the element or feature may be not only directly connected "above", "below", "inside" or "outside" the other (one or more) elements, and may also be indirectly connected "above", "below", "inside" or "outside" the other (one or more) elements through an intermediate element.

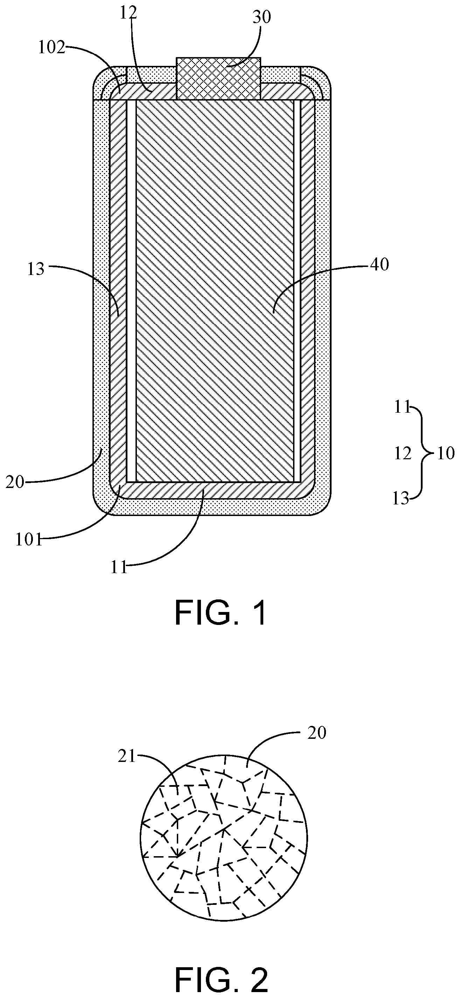

An exemplary example of the present disclosure provides a battery, as shown in FIG. 1 and FIG. 2, the battery includes a battery housing 10, wherein a surface of the battery housing 10 is provided with an insulating coating 20, and at least a part of a surface area of the battery housing 10 has a single-layer insulating coating, with a unit average size in the single-layer insulating coating being 1 mm² to 10 mm².

The battery provided in the example of the present disclosure includes the battery housing 10, and by arranging the insulating coating 20 on the battery housing 10, the problem of poor safety caused by an insulating blue film used for insulation on a surface of the battery being prone to breakdown in the related art is solved, and the safety of the battery is improved. Moreover, at least a part of the surface area of the housing has the single-layer insulating coating, so that the single-layer insulating coating avoids the problem of poor interlayer interface bonding existing in a multi-layer coating. Further, the unit average size of the single-layer insulating coating is 1 mm² to 10 mm². Therefore, on the one hand, the problems that the appearance is poor, the surface of the coating has obvious granular sensation, and more seriously a local substrate is exposed due to discontinuous coating coverage caused by being too high in the viscosity of paint due to a deficient unit average size, and then being not conducive to the spread of the paint are avoided, and the quality and insulation performance of the insulating coating 20 are improved; and on the other hand, the problem that the single-layer coating is too thin due to sagging being likely to occur caused by being too low in the viscosity of the paint due to an excessive unit average size is avoided.

Further, the battery provided in the example of the present disclosure may also include a cell 40 and a pole assembly 30, wherein the battery housing 10 has an accommodating space therein, the cell 40 is arranged in the accommodating space in the housing, the pole assembly 30 is arranged in the battery housing 10, and the pole assembly 30 is connected to the cell 40.

Various parts of the battery provided in the example of the present disclosure will be described in detail below.

The battery housing 10 is used for forming an outer contour of the battery and protecting the cell 40, an electrolyte, an adapter and the like inside the battery. The battery housing 10 may be aluminum housing or a stainless steel housing, and the like.

The battery housing 10 may include a first end wall 11, a second end wall 12 and a side wall 13, wherein the side wall 13 is of a tubular structure, and the first end wall 11 and the second end wall 12 are respectively arranged at two ends of the side wall 13. The first end wall 11 and the side wall 13 may be of an integrally molded structure or a split molded structure, and the second end wall 12 and the side wall 13 may be of an integrally molded structure or a split molded structure.

The insulating coating 20 may be formed on the surface of the battery housing by spraying, coating, electrophoresis and other processes. The unit average size in the single-layer insulating coating is 1 mm² to 10 mm². For example, the unit average size may be 1 mm², 1.5 mm², 2 mm², 3 mm², 3.3 mm², 4 mm², 5 mm², 7 mm², 8 mm², 9.9 mm² or 10 mm², and the like. Further, the unit average size in the single-layer coating may be 1.5 mm² to 8 mm².

A unit average amplitude depth of the insulating coating 20 is 2 µm to 50 µm, for example, the unit average amplitude depth of the insulating coating 20 may be 2 µm, 3 µm, 5 µm, 10 µm, 20 µm, 30 µm, 40 µm or 50 µm, and the like.

A unit quantity of the insulating coating 20 is 10 to 100 within an area of 15 mm×15 mm in the single-layer insulating coating, and the unit quantity indicates a unit quantity segmented in a test area. By setting the unit quantity of the insulating coating 20 to be 10 to 100, on the one hand, the problem that the surface has severe granular sensation caused by being high in the viscosity of paint and then not easy to level the paint due to an excessive value of the unit quantity and a deficient unit average size of the single unit; and on the other hand, the problems that a coverage effect of the paint in the area of the single-layer insulating coating is relatively poor and the insulation performance is poor caused by being low in the viscosity of the paint due to a deficient value of the unit quantity.

Wherein the unit average size refers to that three-dimensional topographic data is collected on a surface selection area of the insulating coating 20, and an image in a corresponding area is obtained from the acquired topographic data, the area is segmented into a plurality of units by a height vertex connecting line in three-dimensional topography, an area of each unit is a unit size, and an average value of all the unit sizes in the selection area is the unit average size. The unit amplitude depth refers to a height altitude difference between a maximum amplitude and a minimum amplitude of each coating unit in the three-dimensional topography of the surface of the insulating coating 20, and the unit average amplitude depth is an average value of all the unit amplitude depths in the selection area.

In the example of the present disclosure, the unit average size, the unit average amplitude depth and the unit quantity may be obtained by the following method: being obtained by calculation through a rough paint algorithm by utilizing a BYK (BYK Chemie) spectro2profiler. During a test, an area of 15 mm×15 mm is selected as a test area for three-dimensional topographic characterization, according to three-dimensional topography, height vertexes in the three-dimensional topography are connected into a line, a corresponding area is divided into a plurality of coating units 21, an area of the coating unit 21 is a unit size, and an average value of the sizes of the plurality of coating units 21 is a unit average size. A unit amplitude depth is a height altitude difference between a maximum amplitude and a minimum amplitude of each coating unit 21, and a unit average amplitude depth is an average value of all the unit amplitude depths.

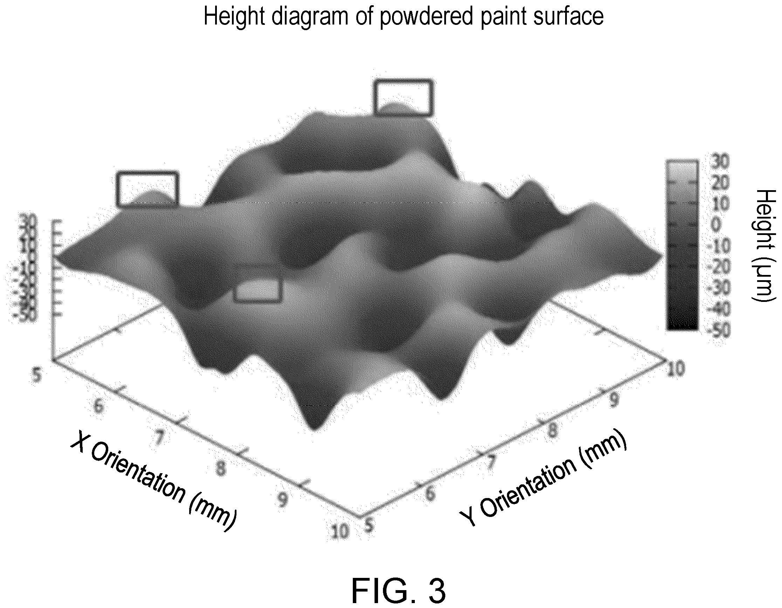

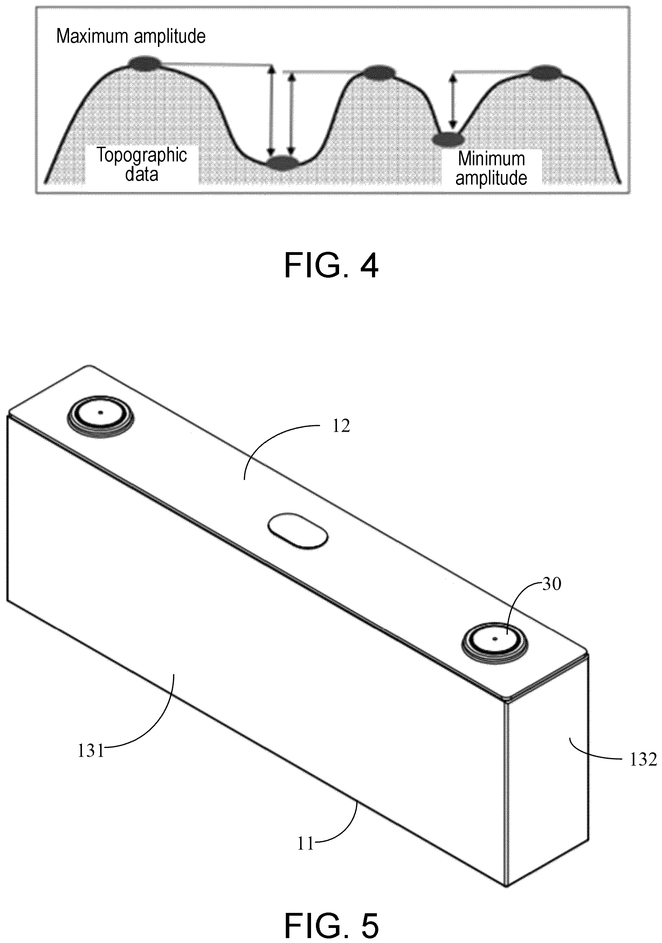

With reference to FIG. 3, in a three-dimensional topographic diagram obtained by utilizing the BYK spectro2profiler, height vertexes are found and connected into a line, and coating units in the coating are determined. With reference to FIG. 4, the unit amplitude depth is a height difference between the maximum amplitude and the minimum amplitude in each coating unit.

It should be noted that the unit average size of the insulating coating 20 provided in the example of the present disclosure is adjusted primarily by a paint formula. In some embodiments, the paint formula includes photosensitive resin, and the unit average size may be adjusted by adjusting the type of the photosensitive resin, for example, the unit average size may be adjusted by adjusting a ratio of high molecular weight polyurethane acrylates to TPGDA monomers, wherein the molecular weight of the polyurethane acrylates is controlled to be in a range of 10,000-50,000.

It is understood that when the insulating coating 20 on the battery housing 10 has a multi-layer area, the unit average size in the multi-layer insulating coating may be the same as the unit average size in the single-layer insulating coating. That is, the unit average size in the multi-layer insulating coating is 1 mm² to 10 mm². Of course, in practical applications, the unit average size in the multi-layer insulating coating may also be different from the unit average size in the single-layer insulating coating, which is not limited to this in the example of the present disclosure.

The battery housing is provided with a multi-layer coating area, the multi-layer coating area is provided with a multi-layer insulating coating, a thickness of an outermost single-layer insulating coating in the multi-layer insulating coating is 10 µm to 60 µm, and a unit average size of the outermost single-layer insulating coating is 2 mm² to 10 mm². When the battery housing has the multi-layer insulating coating, the thickness of the outermost single-layer insulating coating in the multi-layer insulating coating is set to be 10 µm to 60 µm, so as to prevent the outermost insulating coating from being too thick while achieving an insulation effect of an inner insulating coating. Moreover, the unit average size of the outermost insulating coating is set to be 2 mm² to 10 mm², so that the flatness of the surface of the battery may be increased.

It should be noted that the single-layer insulating coating in the example of the present disclosure refers to the insulating coating 20 formed by spraying once on the surface of the battery housing 10. The multi-layer insulating coating refers to the insulating coating 20 formed by spraying at least twice on the surface of the battery housing 10, and in the multi-layer insulating coating, adjacent insulating coatings 20 are connected to each other and have a connecting interface.

A thickness of the single-layer insulating coating is h, and the unit average size is Cs, 5≤h/Cs≤80. A relationship between the unit average size and the thickness of the single-layer insulating coating is comprehensively adjusted, when the required thickness of the single-layer insulating coating is relatively large, the unit average size cannot be deficient, the paint is prone to leveling if the unit average size is deficient, and the required thickness of the single-layer insulating coating cannot be reached; and the unit average size cannot be deficient, the paint cannot be spread if the unit average size is deficient, so that the thickness of a part of the area of the coating is excessive, the thickness of a part of the area of the coating is deficient, and the flatness of the surface of the coating is poor, and the above problems are solved by 5≤h/Cs≤80.

When h is greater than or equal to 80 µm, 2 mm²≤Cs≤5 mm². When the thickness of the single-layer insulating coating is relatively large, Cs cannot be deficient, the paint cannot be spread if Cs is deficient, and a part of the area of the coating is too thick, so that the flatness of the coating is too poor; and Cs cannot be deficient, the paint is prone to leveling if Cs is deficient, the required thickness of the insulating coating is difficult to achieve, and the above problems are solved by setting Cs to be 2 mm²-≤5 mm² when h is greater than or equal to 80 µm.

In a feasible embodiment of the present disclosure, the battery housing 10 includes a first end wall 11 and a side wall 13, wherein the first end wall 11 and the side wall 13 are connected and are of an integrally molded structure, a first transition portion 101 is formed between the first end wall 11 and the side wall 13, and the first transition portion 101 is coated with the single-layer insulating coating. The first transition portion 101 is vulnerable to impact or collision and the like in a running or use process of the battery, and the single-layer insulating coating is arranged at the first transition portion 101, so that the safety of the battery can be improved (there is no interlayer interface in the single-layer insulating coating, so that the shock resistance and vibration resistance are high).

Optionally, a minimum thickness of the insulating coating 20 at the first transition portion 101 is h1, a thickness of the insulating coating 20 at the side wall 13 is h2, and when h1/h2>0.5, 2 mm²≤Cs≤8 mm². The paint at the position of the transition portion is prone to sagging, but the position is vulnerable to collision, and the thickness of the insulating coating cannot be deficient, so that Cs of the side wall 13 cannot be excessive, and the thickness of the coating adhered to the transition portion is deficient when Cs is excessive; and meanwhile, Cs of the side wall 13 cannot be deficient, and the paint cannot be spread when Cs is deficient, so that the thickness of the insulating coating at a local position of the transition portion is excessive, heat at the position of the transition portion cannot be dissipated in time, which may also cause some positions of the transition portion to be not covered by the insulating coating, and the risk of insulation failure is high. When a ratio of h1 to h2 is set to be greater than or equal to 0.5, the risk of insulation failure of the first transition portion 101 is reduced by controlling the range of the unit average size to satisfy 2 mm²≤Cs≤8 mm².

For example, the thickness of the insulating coating 20 at the first transition portion 101 is 70 µm to 300 µm. The thickness of the insulating coating 20 at the first transition portion 101 is 70 µm to 300 µm, so that the problem that heat concentration is likely to occur at the position of the first transition portion 101 due to the excessive thickness is avoided.

A radius of the first transition portion 101 is R, and the unit average size of the insulating coating at the side wall is Cs1, 0.05≤R/Cs1≤5. The radius R and Cs1 of the first transition portion 101 need to satisfy 0.05≤R/Cs1≤5; when R is relatively small, the risk of paint sagging is increased, and when R is relatively small, it is necessary to control Cs1 of the side wall to be not excessive, so as to preventing the risk of insulation failure from being increased due to the too thin insulating coating at the transition portion from; in addition, Cs1 cannot be deficient, and the paint cannot be spread if Cs1 is deficient, and the coating is more difficult to form at the position of the first transition portion 101.

In another feasible embodiment of the present disclosure, the battery housing 10 may include a first end wall 11, a side wall 13 and a second end wall 12, wherein the first end wall 11 and the side wall 13 are integrally molded, the second end wall 12 is blocked at one end of the side wall away from the first end wall, a second transition portion 102 is formed between the second end wall 12 and the side wall 13, and the second transition portion 102 is coated with the multi-layer insulating coating.

The pole assembly 30 is arranged on the second end wall 12 and connected to the cell 40. The pole assembly 30 is used as an output terminal of the battery. Illustratively, the pole assembly 30 may include a column, a first connecting portion and a second connecting portion, wherein the second end wall 12 is provided with a mounting hole, the column is arranged in the mounting hole in a penetrating way, the first connecting portion is connected to one end of the column close to the cell 40, and the first connecting portion is connected to the cell 40; and the second connecting portion is connected to one end of the column away from the cell 40, and the second connecting portion is used for connecting external conductive members (such as a busbar).

In one embodiment, as shown in FIG. 5, the battery is a quadrangular battery (square battery), the side wall 13 includes a first side wall 131 and a second side wall 132, wherein an area of the first side wall 131 is greater than an area of the second side wall 132, the first side wall is provided with the single-layer insulating coating, and a wall thickness of the first side wall is W, 0.3≤W1×Cs8. The battery will expand in charging and discharging processes, when the first side wall 131 is relatively thin, the risk of expansion and deformation of the first side wall 131 is increased, and the deformation of the first side wall 131 under stress will cause the single-layer insulating coating on a surface of the first side wall 131 to be affected by an expansion force. When Cs is deficient, the paint in a local area is not spread, since the coating in the area in which the paint is not spread is too thick, the risk of coating cracking caused by the housing being under stress is increased. Therefore, the first side wall 131 is provided with the single-layer insulating coating, and the unit average size cannot be deficient when the wall is relatively thin. When the first side wall is relatively thick, the risk of deformation of the housing under stress is low, and the unit average size may be set to be smaller, so that W1×Cs is set to be 0.3-8.

When the area of the first side wall 131 is greater than the area of the second side wall 132, in the charging and discharging processes of the battery, the expansion of the first side wall 131 is greater than the expansion of the second side wall 132, the expansion of the first side wall is large, and therefore the insulating coating on the first side wall is preferably set to be the single-layer insulating coating.

For example, the unit average size at the first side wall 131 is 2 mm² to 5 mm², and the unit average amplitude depth at the first side wall 131 is <10 µm. The side wall 13 may include two first side walls 131 and two second side walls 132, wherein the two first side walls 131 are arranged opposite to each other, and the two second side walls 132 are arranged opposite to each other.

When the quadrangular batteries are grouped, a plurality of batteries are arranged sequentially, and the first side walls 131 of two adjacent batteries are arranged opposite to each other. That is, the first side walls 131 are opposite faces when the batteries are stacked, the unit average size at the first side wall 131 is set to be 2 mm² to 5 mm², and the unit average amplitude depth at the first side wall 131 is set to be <10 µm. Therefore, on the one hand, the roughness of the insulating coating 20 may be ensured, thereby being conducive to the improvement of the bonding strength between the batteries during bonding and fixing; and on the other hand, the problem of poor flatness of an external surface of the battery caused by a deficient unit average size is also avoided.

The thickness of the insulating coating 20 of the first side wall 131 is 80 µm to 200 µm. In the quadrangular battery, the housing at the first side wall 131 of the battery housing 10 is subjected to the largest expansion. In order to prevent the expansion of the battery housing 10 from affecting the insulating coating 20, the thickness of the insulating coating 20 of the first side wall 131 is set to be 80 µm to 200 µm. On the one hand, the problem that the coating is prone to cracking due to the housing being under stress caused by the excessive thickness of the single-layer insulating coating of the first side wall 131 is avoided, and the problem that the risk of cracking of the single-layer insulating coating is increased due to the stress is transferred from inside to outside in the case of the single-layer coating is solved; and on the other hand, the problem of poor insulation performance caused by the deficient thickness of the insulating coating 20 is also avoided.

Further, the unit average size at the first end wall 11 is 1 mm² to 8 mm², and the unit average amplitude depth at the first end wall 11 is >8 µm. The first end wall 11 is used for being bonded and fixed with the battery box (may be directly connected or indirectly connected, for example, structural adhesive is arranged between the battery and the box to achieve bonding; or the battery is firstly bonded and fixed with a supporting member, and the supporting member is connected to the box), the unit average size at the first end wall 11 is 1 mm² to 8 mm², and the unit average amplitude depth at the first end wall 11 is >8 µm, so that the connection stability of the battery and the battery box can be ensured.

When the battery is the quadrangular battery, the second end wall 12 may be provided with a first pole assembly and a second pole assembly, wherein the first pole assembly is a positive pole of the battery, and the second pole assembly is a negative pole of the battery. The first pole assembly is connected to a positive tab of the cell 40, and the second pole assembly is connected to a negative pole of the cell 40.

In another embodiment, the battery may be a cylindrical battery. On this basis, the first end wall 11 and the second end wall 12 are of disk structures, and the wall thickness of the first end wall is W2, 0.5≤W2×Cs≤15.

The end wall of the cylindrical battery is subjected to large expansion, so that the single-layer insulating coating is arranged at the end wall, so as to prevent the insulating coating at the end wall from cracking when the end wall expands. Moreover, 0.5≤W2×Cs≤15, so as to further prevent the insulating coating of the first end wall 11 from cracking during expansion.

When the battery is the cylindrical battery, the second end wall 12 is provided with one pole assembly 30, the pole assembly 30 is used as one electrode end of the battery, and the other electrode end of the battery is the battery housing 10. For example, the pole assembly 30 is a positive end of the battery, the pole assembly 30 is connected to the positive tab of the cell 40, the battery housing 10 is a negative end of the battery, and the battery housing 10 is connected to the negative tab of the cell 40.

The cell 40 is arranged in the battery housing 10, the cell 40 is connected to the pole, and the cell 40 is immersed in the electrolyte. The cell 40 includes a cell 40 main body and tabs, wherein the tabs extend from the cell 40 main body; and there are two tabs on the cell 40 main body, the two tabs are respectively a first tab (positive tab) and a second tab (negative tab), and the first tab and the second tab may be respectively connected to the corresponding adapter.

It should be noted that the cell 40 main body may include more than two pole pieces, the tabs include more than two single tabs, the single tabs respectively extend from the corresponding pole pieces, a width of the single tab is less than a width of the pole piece, and a plurality of single tabs are stacked to form the tab.

In one example, the battery is a laminated battery, so as to not only facilitate the grouping, but also obtain a longer battery by processing. The cell 40 is a laminated cell 40, and the cell 40 has first pole pieces stacked with each other, second pole pieces charged oppositely to the first pole pieces, and separator pieces arranged between the first pole pieces and the second pole pieces, so that a plurality of pairs of first pole pieces and second pole pieces are stacked to form the laminated cell 40.

Optionally, the cell 40 may be a winding cell 40, that is, the first pole piece, the second pole piece charged oppositely to the first pole piece, and the separator piece arranged between the first pole piece and the second pole piece are wound to obtain the winding cell 40.

A number of layers of positive plates in the cell is p, and a thickness of the single positive plate is q, p×q=m, 900 µm/mm²≤m/Cs≤30,000 µm/mm². The larger the product m of the number of layers and thickness of the positive plates in the battery is, the greater the battery expansion is. When the expansion is greater, if Cs is deficient, the risk of coating cracking in a part of the area in which the paint is not spread is increased. Therefore, by setting m/Cs to be 900 µm/mm²≤m/Cs≤30,000 µm/mm², the risk of insulating coating cracking can be reduced, thereby ensuring the insulation performance after the expansion of the battery.

When the two electrode ends of the single battery are respectively the first pole and the second pole, the first tab is connected to the first pole through a first adapter, and the second tab is connected to the second pole through a second adapter. When the two electrode ends of the single battery are respectively the pole and the battery housing 10, the first tab is connected to the pole through the first adapter, and the second pole is connected to the battery housing 10 through the second adapter.

The battery provided in the example of the present disclosure includes the battery housing 10, and by arranging the insulating coating 20 on the battery housing 10, the problem of poor safety caused by an insulating blue film used for insulation on a surface of the battery being prone to breakdown in the related art is solved, and the safety of the battery is improved. Moreover, at least a part of the surface area of the housing has the single-layer insulating coating, so that the single-layer insulating coating avoids the problem of poor interlayer interface bonding existing in a multi-layer coating. Further, the unit average size in the single-layer insulating coating is 1 mm² to 10 mm². Therefore, on the one hand, the problems that the appearance is poor, the surface of the coating has obvious granular sensation, and more seriously a local substrate is exposed due to discontinuous coating coverage caused by being too high in the viscosity of paint due to a deficient unit average size, and then being not conducive to the spread of the paint are avoided, and the quality and insulation performance of the insulating coating 20 are improved; and on the other hand, the problem that the single-layer coating is too thin due to sagging being likely to occur caused by being too low in the viscosity of the paint due to an excessive unit average size is avoided.

An exemplary example of the present disclosure further provides a battery device, including the battery. The battery includes a battery housing 10, wherein a surface of the battery housing 10 is provided with an insulating coating 20, and at least a part of a surface area of the housing has a single-layer insulating coating, with a unit average size in the single-layer insulating coating being 1 mm² to 10 mm².

The battery device may include at least one battery pack, wherein the battery pack includes a plurality of batteries which are arranged in a preset sequence. When the batteries are quadrangular batteries, the plurality of batteries in the battery pack are arranged sequentially, and first side walls 131 of adjacent batteries in the battery pack are opposite (the batteries are stacked along large faces). When the batteries are cylindrical batteries, the plurality of batteries in the battery pack may be arranged vertically in the battery device, or the plurality of batteries in the battery pack may be arranged horizontally in the battery device.

Further, the battery device provided in the example of the present disclosure may further include a box, a heat exchange assembly and a power management assembly, and the like, wherein the box has a battery compartment and an electric compartment therein, the batteries are arranged in the battery compartment, and the power management assembly is arranged in the electric compartment. The heat exchange assembly is at least partially in thermally conductive connection with the batteries (for example, the heat exchange assembly abuts against the batteries, or the heat exchange assembly is connected to the batteries through thermally conductive adhesive).

Illustratively, the box may include a bottom plate and a frame, wherein the frame and the bottom plate are connected, an accommodating space is enclosed by the frame and the bottom plate, a separation beam is arranged in the accommodating space, and the accommodating space in the frame is divided into the battery compartment and the electric compartment by the separation beam. Of course, in practical applications, the separation beam may also be not arranged between the battery compartment and the electric compartment, that is, the battery compartment and the electric compartment are communicated, which is not specifically limited in the example of the present disclosure.

The battery device provided in the example of the present disclosure includes the battery, and by arranging the insulating coating 20 on the battery housing 10 in the battery, the problem of poor safety caused by an insulating blue film used for insulation on a surface of the battery being prone to breakdown in the related art is solved, and the safety of the battery device is improved. Moreover, at least a part of the surface area of the housing has the single-layer insulating coating, so that the single-layer insulating coating avoids the problem of poor interlayer interface bonding existing in a multi-layer coating. Further, the unit average size in the single-layer insulating coating is 1 mm² to 10 mm². Therefore, on the one hand, the problems that the appearance is poor, the surface of the coating has obvious granular sensation, and more seriously a local substrate is exposed due to discontinuous coating coverage caused by being too high in the viscosity of paint due to a deficient unit average size, and then being not conducive to the spread of the paint are avoided, and the quality and insulation performance of the insulating coating 20 are improved; and on the other hand, the problem that the single-layer coating is too thin due to sagging being likely to occur caused by being too low in the viscosity of the paint due to an excessive unit average size is avoided.

The battery device provided in the example of the present disclosure may be applied to an electric vehicle, and when the battery device is used in the electric vehicle, the battery device may be a battery package, and the battery package is mounted on the electric vehicle to provide energy for the electric vehicle.

In practical applications, the battery package may be mounted on a carriage of the electric vehicle. The battery package may be fixedly connected to the carriage. Or the battery package may be a modular battery package, and the modular battery package can be detachably connected to a main body of the vehicle, thereby facilitating replacement.

An exemplary example of the present disclosure further provides electric equipment, including the above battery device. For example, the electric equipment may be an electric vehicle or an energy storage base station, and the like.

After considering the specification and practicing the present invention disclosed herein, those skilled in the art will readily think of other implementations of the present disclosure. The present application is intended to cover any variation, use or adaptation of the present disclosure, and these variations, uses or adaptations follow the general principle of the present disclosure and include common knowledge or customary technical means in the technical field not disclosed in the present disclosure. The specification and the examples are deemed to be illustrative only, and the true scope and spirit of the present disclosure are indicated by the attached claims.

## Claims

1. A battery, **characterized by** comprising:
a battery housing (10), wherein a surface of the battery housing (10) is provided with an insulating coating (20), and at least a part of a surface area of the battery housing (10) has a single-layer insulating coating, with a unit average size in the single-layer insulating coating being 1 mm² to 10 mm².

2. The battery of claim 1, **characterized in that** the unit average size in the single-layer insulating coating is 1.5 mm² to 8 mm².

3. The battery of claim 1, **characterized in that** a unit average amplitude depth of the insulating coating is 2 µm to 50 µm.

4. The battery of claim 1, **characterized in that** a unit quantity of the insulating coating (20) is 10 to 100 within an area of 15 mm×15 mm in the single-layer insulating coating.

5. The battery of any one of claims 1 to 4, **characterized in that** the unit average size is a unit average size detected by a BYK spectro2profiler, and the unit average amplitude depth is a unit average amplitude depth detected by the BYK spectro2profiler.

6. The battery of claim 1, **characterized in that** a thickness of the single-layer insulating coating is h, and the unit average size is Cs, 5≤h/Cs≤80.

7. The battery of claim 6, **characterized in that** when h is greater than or equal to 80 µm, 2 mm²≤Cs≤5 mm².

8. The battery of claim 1, **characterized in that** the battery housing (10) comprises a first end wall (11) and a side wall (13), wherein the first end wall (11) and the side wall (13) are connected and are of an integrally molded structure, a first transition portion (101) is formed between the first end wall (11) and the side wall (13), and the first transition portion (101) is provided with the single-layer insulating coating.

9. The battery of claim 8, **characterized in that** a minimum thickness of the insulating coating (20) at the first transition portion (101) is h1, a thickness of the insulating coating (20) at the side wall is h2, and when h1/h2>0.5, the unit average size of the insulating coating (20) at the side wall (13) is 2 mm² to 8 mm².

10. The battery of claim 8, **characterized in that** a radius of the first transition portion (101) is R, and the unit average size of the insulating coating (20) at the side wall (13) is Cs1, 0.05≤R/Cs1≤5.

11. The battery of claim 1, **characterized in that** the battery housing (10) comprises a first end wall (11), a second end wall (12) and a side wall (13), wherein a housing main body is formed by the first end wall (11) and the side wall (13), one end of the housing main body away from the first end wall (11) has an opening, the second end wall (12) is blocked at the opening of the housing main body, a second transition portion (102) is formed between the second end wall (12) and the side wall (13), and a multi-layer insulating coating is arranged at the second transition portion (102).

12. The battery of claim 1, **characterized in that** the battery housing comprises a first end wall (11) and a side wall (13), wherein the first end wall (11) and the side wall (13) are connected, and the single-layer insulating coating is coated at the first end wall (11) and/or the side wall (13).

13. The battery of claim 12, **characterized in that** the battery is a quadrangular battery, the side wall (13) comprises a first side wall (131) and a second side wall (132), an area of the first side wall (131) is greater than an area of the second side wall (132), the first side wall (131) is provided with the single-layer insulating coating, and a wall thickness of the first side wall (131) is W1, 0.3≤W1×Cs≤8.

14. The battery of claim 12, **characterized in that** the battery is a cylindrical battery, and a wall thickness of the first end wall (11) is W2, 0.5≤W2×Cs≤15.

15. The battery of claim 1, **characterized in that** the battery housing (10) is provided with a multi-layer coating area, the multi-layer coating area is provided with a multi-layer insulating coating, a thickness of an outermost single-layer insulating coating in the multi-layer insulating coating is 10 µm to 60 µm, and a unit average size of the outermost single-layer insulating coating is 2 mm² to 10 mm².

16. The battery of claim 1, **characterized by** further comprising:
a cell (40), wherein a number of layers of positive plates in the cell is p, and a thickness of the single positive plate is q, p×q=m, 900 µm/mm²≤m/Cs≤30,000 µm/mm².

17. A battery device, **characterized by** comprising the battery of any one of claims 1 to 16.

18. An electric equipment, **characterized by** comprising the battery device of claim 17.
